# EUROPEAN PATENT APPLICATION

(11) **EP 2 314 854 A1**
(43) Date of publication of application: **27.04.2011**
(21) Application number: 09804830.9
(22) Date of filing: 29.06.2009
(51) Int. Cl.: F02M 21/02, F02M 51/06, F02M 69/04

(54) **GAS FUEL INJECTION VALVE**

(30) Priority: 07.08.2008 JP 2008204268
(71) Applicant: Keihin Corporation, Tokyo 163-0539 (JP)
(72) Inventor: TAKIGUCHI, Naoto, Kakuda-shi Miyagi 981-1505 (JP)
(74) Representative: Prechtel, Jörg
(86) International application number: PCT/JP2009/061854
(87) International publication number: WO 2010/016343

(57) **Abstract**

A gas fuel injection valve is provided in which a valve housing (2) is equipped with a nozzle member (3) having a flat valve seat (8) and a nozzle hole (10) extending through its central part and a magnetic cylindrical body (4) joined thereto, the nozzle member (3) is made of a synthetic resin and is formed on its outer periphery with a first fitting part (11) fitted into a fitting connecting hole (18) of a front end part of the magnetic cylindrical body (4), a second fitting part (12) fitted into a mounting hole (1) of an intake path member (P1) of an engine, and a connecting recess (13) positioned between the two fitting parts (11, 12), the magnetic cylindrical body (4) and the nozzle member (3) are joined to each other by swaging toward the connecting recess (13) side a swage tube part (22) formed at the front end of the magnetic cylindrical body (4), and the second fitting part (12) is formed on its outer periphery with an annular seal groove (15) mounted with a seal member (17) that makes intimate contact with an inner peripheral face of the mounting hole (1) of the intake path member (P1). This enables a seal groove mounted with a seal member that comes into intimate contact with an inner peripheral face of a mounting hole of an intake path member of an engine to be formed without employing any special ring member.

## Description

### TECHNICAL FIELD

The present invention relates to a gas fuel injection valve for supplying natural gas such as CNG or LPG as fuel to an internal combustion engine and, in particular, to an improvement of one in which a valve housing is equipped with a nozzle member having a flat valve seat on a front end part thereof and a nozzle hole extending through a central part thereof, a magnetic cylindrical body joined to this nozzle member, and a fixed core connected to the rear end side of the magnetic cylindrical body, the magnetic cylindrical body slidably houses a magnetic plunger that is attached at a front end thereof with a seating member made of an elastic material that can be seated on the valve seat, the magnetic plunger operating so as to detach the seating member from the valve seat when the fixed core is energized, and a valve spring for urging the magnetic plunger toward the valve seat side is provided in a compressed state between the magnetic plunger and the fixed core.

### BACKGROUND ART

Such a gas fuel injection valve is already known, as disclosed in Patent Document 1 below.
Patent Document 1: Japanese Patent Application Laid-open No. 2007-40245

### DISCLOSURE OF INVENTION

### PROBLEMS TO BE SOLVED BY THE INVENTION

In such a conventional gas fuel injection valve, the whole of the nozzle member, which is disc-shaped, is fitted into the inner peripheral face of the front end part of the magnetic cylindrical body, a pair of front and rear ring members for defining an annular seal groove are mounted on the outer periphery of the magnetic cylindrical body, and the seal groove is equipped with a seal member that, when the magnetic cylindrical body is fitted into a mounting hole of an intake path member of the engine, comes into intimate contact with the inner peripheral face of the mounting hole. In such an arrangement, in order to define the seal groove on the outer periphery of the magnetic cylindrical body, a pair of ring members exclusively used therefor are required, and there are therefore a large number of components and a large number of assembly steps, this hindering cost reduction.

The present invention has been accomplished in the light of such circumstances, and it is an object thereof to provide a gas fuel injection valve that enables the number of components and the number of assembly steps to be reduced, and consequently the cost to be reduced, by making it possible to form a seal groove mounted with a seal member that comes into intimate contact with an inner peripheral face of a mounting hole of an intake path member of an engine without employing any special ring member.

### MEANS FOR SOLVING THE PROBLEMS

In order to attain the above object, according to a first aspect of the present invention, there is provided a gas fuel injection valve in which a valve housing comprises a nozzle member having a flat valve seat on a front end part thereof and a nozzle hole extending through a central part thereof, a magnetic cylindrical body joined to this nozzle member, and a fixed core connected to the rear end side of the magnetic cylindrical body, the magnetic cylindrical body slidably houses a magnetic plunger that is attached at a front end thereof with a seating member made of an elastic material that can be seated on the valve seat, the magnetic plunger operating so as to detach the seating member from the valve seat when the fixed core is energized, and a valve spring for urging the magnetic plunger toward the valve seat side is provided in a compressed state between the magnetic plunger and the fixed core, characterized in that nozzle member is made of a synthetic resin, and the nozzle member is formed on an outer periphery thereof with a first fitting part positioned at a rear end part of the nozzle member and fitted into a fitting connecting hole of a front end part of the magnetic cylindrical body, a second fitting part positioned at a front end part of the nozzle member and fitted into a mounting hole of an intake path member of an engine, and a connecting recess positioned between the first and second fitting parts, the magnetic cylindrical body and the nozzle member are joined to each other by swaging toward the connecting recess side a swage tube part formed at a front end of the magnetic cylindrical body, and the second fitting part is formed on an outer periphery thereof with an annular seal groove mounted with a seal member that makes intimate contact with an inner peripheral face of the mounting hole.

Further, according to a second aspect of the present invention, in addition to the first aspect, wherein an annular seal groove is formed on the outer periphery of the first fitting part, the annular seal groove mounted with a seal member that makes intimate contact with an inner peripheral face of the fitting connecting hole.

Furthermore, according to a third aspect of the present invention, in addition to the first aspect, wherein a front end face of the second fitting part is formed as a tapered face that increases in diameter in going toward the seal groove on the outer periphery of the second fitting part.

Moreover, according to a fourth aspect of the present invention, in addition to the first aspect, wherein the nozzle hole of the nozzle member comprises an orifice opening on the valve seat, an outlet hole opening on the front end face of the nozzle member and having a larger diameter and length than the orifice, and a tapered hole providing continuous connection between the orifice and the outlet hole.

### EFFECTS OF THE INVENTION

In accordance with the first aspect of the present invention, when joining the magnetic cylindrical body and the nozzle member by fitting the first fitting part of the nozzle member into the fitting connecting hole of the front end part of the magnetic cylindrical body and swaging the swage tube part of the magnetic cylindrical body toward the connecting recess of the nozzle member, swaging of the swage tube part toward the connecting recess side can be carried out easily by the connecting recess receiving the extremity part of a swaging tool without interference from the second fitting part, thereby reliably carrying out joining of the magnetic cylindrical body and the nozzle member.

Furthermore, since the annular seal member on the outer periphery of the second fitting part is mounted therein with the seal member, which makes intimate contact with the inner peripheral face of the mounting hole when the second fitting part is fitted into the mounting hole of the intake path member of the engine, it is possible to seal the mounting hole, thus reliably preventing leakage of gas fuel between the intake path member and the injection valve. Moreover, forming the seal groove, in which the seal member is mounted, in the second fitting part of the nozzle member itself, which is supported by the magnetic cylindrical body and projects forward, makes it unnecessary to employ a special ring for defining the seal groove, thereby cutting the number of components and the number of assembly steps, and consequently reducing the cost.

Moreover, since the synthetic resin nozzle member can form the nozzle hole, the first fitting part, the second fitting part and the connecting recess in one process at the time of molding thereof, hardly any post-processing is necessary after molding, thus further reducing the cost.

In accordance with the second aspect of the present invention, since the seal member, which makes intimate contact with the inner peripheral face of the fitting connecting hole of the magnetic cylindrical body, is mounted in the annular seal groove on the outer periphery of the first fitting part of the nozzle member, it is possible to seal the fitting connecting hole, thereby reliably preventing leakage of gas fuel between the magnetic cylindrical body and the nozzle member.

In accordance with the third aspect of the present invention, when the seal member is mounted in the seal groove of the outer periphery of the second fitting part, the tapered face of the second fitting part front end guides the increased diameter of the seal member, thus giving good ease of mounting.

In accordance with the fourth aspect of the present invention, when gas fuel is injected from the gas fuel injection valve into the intake path member of the engine, the flow rate of gas fuel at the nozzle hole can be regulated at a constant level by the orifice forming an upstream part of the nozzle hole. Moreover, since gas fuel that has passed through the orifice flows via the tapered hole to the outlet hole, which is larger in diameter and longer than the orifice, its flow is smooth and no turbulent flow is generated, thereby stabilizing the amount of fuel injected.

### BRIEF DESCRIPTION OF DRAWINGS

[FIG. 1] FIG. 1 is a vertical sectional view of a gas fuel injection valve related to an embodiment of the present invention. (first embodiment)
[FIG. 2] FIG. 2 is an enlarged view of part 2 in FIG. 1. (first embodiment)

### EXPLANATION OF REFERENCE NUMERALS AND SYMBOLS

- I: Gas fuel injection valve
- P1: Intake path member
- 1: Mounting hole
- 2: Valve housing
- 3: Nozzle member
- 4: Magnetic cylindrical body
- 6: Fixed core
- 8: Valve seat
- 10: Nozzle hole
- 10a: Orifice
- 10b: Tapered hole
- 10c: Outlet hole
- 11: First fitting part
- 12: Second fitting part
- 13: Connecting recess
- 14: Seal groove on outer periphery of first fitting part (first seal groove)
- 15: Seal groove on outer periphery of second fitting part (second seal groove)
- 16: Seal member mounted in seal groove on outer periphery of first fitting part (first seal member)
- 17: Seal member mounted in seal groove on outer periphery of second fitting part (second seal member)
- 22: Swage tube part
- 25: Magnetic plunger
- 29: Seating member
- 42: Valve spring

### BEST MODE FOR CARRYING OUT THE INVENTION

A mode for carrying out the present invention is explained below by reference to a preferred embodiment of the present invention shown in the attached drawings.

### [Embodiment 1]

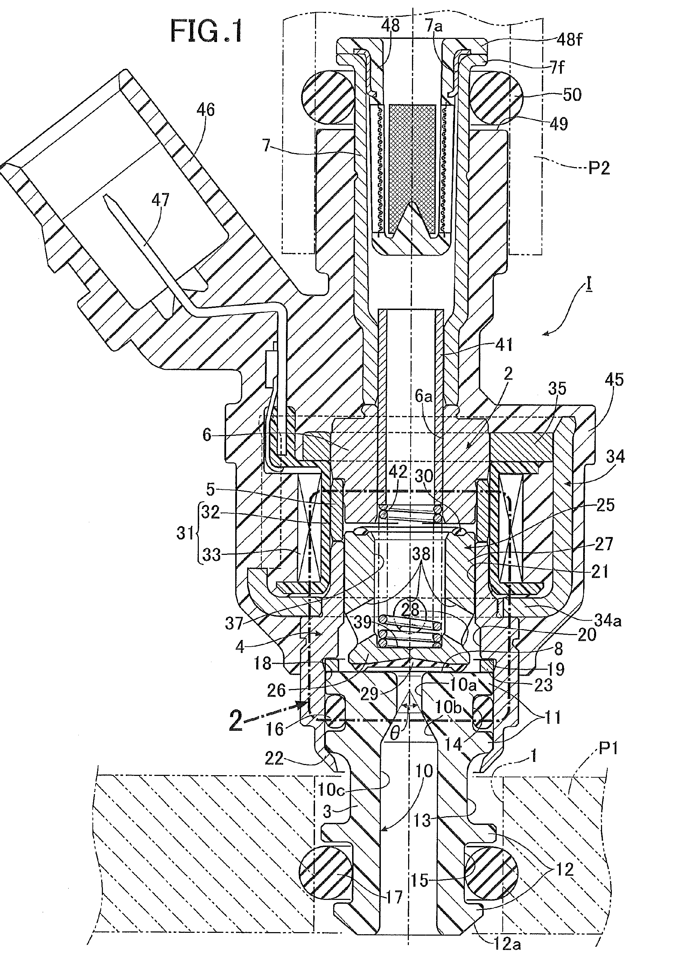

In FIG. 1, a gas fuel injection valve I has its front end part fitted into a mounting hole 1 provided in an intake path member P1 of an engine, and during an intake stroke of the engine gas fuel can be injected into the intake path member P1.

A valve housing 2 of this injection valve I is formed by coaxially disposing in sequence, from the front end side, a nozzle member 3, a magnetic cylindrical body 4, a non-magnetic collar 5, a fixed core 6, and a fuel inlet tube 7 and liquid-tightly joining them to each other.

The nozzle member 3 is made of a synthetic resin, a nozzle hole 10 is formed in its central part, and a rear end face on which this nozzle hole 10 opens is formed as a flat valve seat 8. Formed on the outer periphery of the nozzle member 3 are a first fitting part 11 positioned at a rear end part of the nozzle member 3, a second fitting part 12 positioned at a front end part of the nozzle member 3, and an annular connecting recess 13 positioned between the first and second fitting parts 11 and 12, and provided on the outer peripheries of the first and second fitting parts 11 and 12 respectively are annular first and second seal grooves 14 and 15. These first and second seal grooves 14 and 15 have first and second seal members 16 and 17 such as O rings mounted therein, respectively. A front end face of the second fitting part 12 is formed as a tapered face 12a that increases in diameter in going toward the second seal groove 15, and this tapered face 12a guides the increase in diameter of the second seal member 17 when the second seal member 17 is mounted in the second seal groove 15, thus making its mounting easy.

On the other hand, provided in the inner periphery of the magnetic cylindrical body 4 are, from the front end side, a fitting connecting hole 18, an annular recess 20 that has a smaller diameter than the fitting connecting hole 18 and is connected to the rear end of the fitting connecting hole 18 via an annular step 19, and a sliding guide hole 21 that has a smaller diameter than the annular recess 20 and is connected to the rear end thereof, and formed at the front end of the magnetic cylindrical body 4 is a thin swage tube part 22. The first fitting part 11 of the nozzle member 3 is fitted into the fitting connecting hole 18, and in this arrangement the first seal member 16 comes into intimate contact with the inner peripheral face of the fitting connecting hole 18 to thus seal the fitting connecting hole 18. Swaging the swage tube part 22 toward the connecting recess 13 of the nozzle member 3 joins the magnetic cylindrical body 4 and the nozzle member 3.

In this arrangement, the connecting recess 13 receives an extremity part of a swaging tool, thus making it easy to swage the swage tube part 22 inward in the radial direction. Furthermore, an annular shim 23 is inserted and retained between the annular step 19 of the magnetic cylindrical body 4 and a rear end face of the nozzle member 3, the annular shim 23 restricting the depth of fitting of the first fitting part 11 into the fitting connecting hole 18 to thus adjust the position in the axial direction of the valve seat 8.

The second fitting part 12 of the nozzle member 3 is to be fitted into the mounting hole 1 of the intake path member P1 of the engine, and in this arrangement the second seal member 17 comes into intimate contact with the inner peripheral face of the mounting hole 1 to thus seal the mounting hole 1.

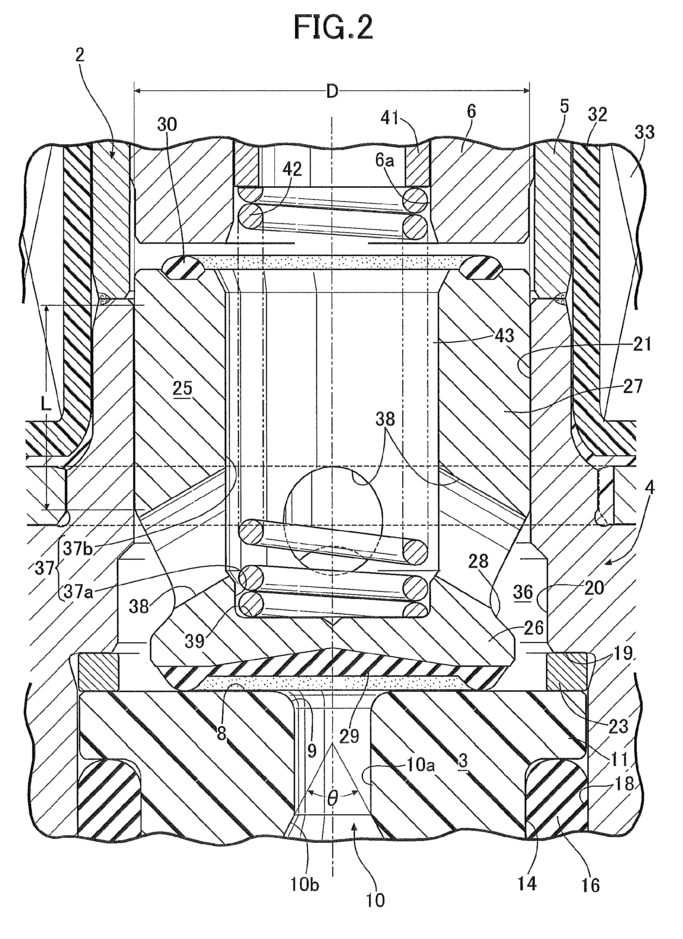

The nozzle hole 10 extending through the central part of the nozzle member 3 is formed from an orifice 10a opening on the valve seat 8, an outlet hole 10c opening on the front end face of the nozzle member 3 and having a larger diameter and length than the orifice 10a, and a tapered hole 10b providing a continuous connection between the orifice 10a and the outlet hole 10c. A funnel-shaped roundness 9 (see FIG. 2) is formed on the edge of the orifice 10a, which opens on the valve seat 8. It is desirable to set the radius of this roundness 9 at substantially 0.5 m. Furthermore, it is desirable to set a central angle θ of the tapered hole 10b at substantially 60°. In accordance with the setting thereof, a maximum fuel flow rate can be ensured for the same diameter orifice 10a.

The above nozzle hole 10, the first fitting part 11 equipped with the first seal groove 14, the second fitting part 12 equipped with the second seal groove 15, and the connecting recess 13 are formed at the same time when injection molding the nozzle member 3, which is made of a synthetic resin.

A magnetic plunger 25 is slidably housed within the magnetic cylindrical body 4. This magnetic plunger 25 is formed by coaxially and integrally connecting from the front end side a valve part 26 and a tubular sliding part 27, the tubular sliding part 27 being disposed so that it is slidably fitted into the sliding guide hole 21 and its rear end face opposes an attracting face at the front end of the fixed core 6 inside the non-magnetic collar 5. This tubular sliding part 27 is formed so as to have an axial support length L by the sliding guide hole 21 that is shorter than an outer diameter D.

An annular recess 28 is formed in the outer periphery of the valve part 26, this annular recess 28 defining an annular fuel chamber 36 between itself and the annular recess 20 of the magnetic cylindrical body 4.

Furthermore, a rubber seating member 29 is joined to a front end face of the valve part 26 by baking. This seating member 29 can open and close the nozzle hole 10 by being detached from and seated on the valve seat 8. A stopper rubber 30 is baked to a rear end face of the tubular sliding part 27, and when the fixed core 6 attracts the magnetic plunger 25, this stopper rubber 30 abuts against a front end face of the fixed core 6, thus making the seating member 29 detach from the valve seat 8 by a predetermined stroke.

A coil assembly 31 is disposed from the magnetic cylindrical body 4 to the fixed core 6 on the outer peripheries thereof. This coil assembly 31 is formed from a bobbin 32 fitted onto outer peripheral faces from the magnetic cylindrical body 4 to the fixed core 6, and a coil 33 wound around the outer periphery of the bobbin 32, this coil assembly 31 having a coil housing 34 disposed on its outer periphery. This coil housing 34 is a magnetic body and has at its front end an inward flange 34a pressed onto the outer periphery of the magnetic cylindrical body 4 and supporting a front end face of the bobbin 32, and an annular yoke 35 is fitted into an inner peripheral face of a rear end part of the coil housing 34, the annular yoke 35 being pressed onto an outer peripheral face of a rear end part of the fixed core 6 and abutting against a rear end face of the bobbin 32.

As shown in FIG. 2, the magnetic plunger 25 is provided with a bottomed lengthwise hole 37 and a plurality of sideways holes 38, the bottomed lengthwise hole 37 extending from the rear end face of the magnetic plunger 25 to the tubular sliding part 27 in the axial direction and finishing just before a front end face of the valve part 26, the sideways holes 38 providing communication between the lengthwise hole 37 and the fuel chamber 36, and a bottom face of the lengthwise hole 37 being formed as a spring seat 39. Therefore, in the magnetic plunger 25, the spring seat 39 is disposed offset further forward than the tubular sliding part 27.

Furthermore, the fixed core 6 has a hollow portion 6a extending through its center, and a pipe-shaped retainer 41 providing communication between the fuel inlet tube 7 and the lengthwise hole 37 is fitted into and secured to an inner peripheral face of the hollow portion 6a. In this arrangement, a valve spring 42 is provided as a coil spring in a compressed state between the retainer 41 and the valve seat 8, this urging the magnetic plunger 25 in the direction direction in which it is seated on the valve seat 8.

The lengthwise hole 37 is formed from a small diameter hole 37a and a large diameter hole 37b; the small diameter hole 37a rises from the spring seat 39 and conforms to the outer periphery of a front end part of the valve spring 42, and the large diameter hole 37b has a larger diameter than the small diameter hole 37a and extends from the rear end of the small diameter hole 37a to a rear end face of the magnetic plunger 25, inner ends of the sideways holes 38 opening in the large diameter hole 37b. By so doing, the inner peripheral face of the large diameter hole 37b and the outer peripheral face of the valve spring 42 define a tubular gap 43 therebetween, the tubular gap 43 communicating with the sideways holes 38. Furthermore, the hollow portion 6a of the fixed core 6 is formed so that the outer periphery of a rear end part of the valve spring 42 supported by the retainer 41 conforms thereto.

A resin molded layer 45 is formed on the valve housing 2 by injection molding, the resin molded layer 45 covering outer peripheral faces of the magnetic cylindrical body 4, the coil housing 34, and the fuel inlet tube 7 and penetrating to an area around the coil assembly 31 and, in this arrangement, a coupler 46 for retaining an energizing terminal 47 connected to the coil 33 is integrally formed with the resin molded layer 45.

The fuel inlet tube 7 has a flange 7f at the rear end, and a fuel filter 48 having a flange 48f that is superimposed on the flange 7f is press-fitted into a fuel inlet 7a in a rear end part of the fuel inlet tube 7. An annular groove 49 is defined between the flange 7f of the fuel inlet tube 7 and a rear end face of the resin molded layer 45, a seal member 50 being mounted in the annular groove 49. This seal member 50 comes into intimate contact with an inner peripheral face of a gas fuel distribution pipe P2 when the fuel inlet tube 7 is inserted thereinto.

The operation of this embodiment is now explained.

In a de-energized state of the coil 33, the magnetic plunger 25 is pushed forward by the urging force of the valve spring 42, and the seating member 29 is seated on the valve seat 8. In this state, gas fuel that has been fed from a gas fuel tank, which is not illustrated, to the distribution pipe P2 flows into the fuel inlet tube 7, is filtered by the fuel filter 48, flows through the interior of the pipe-shaped retainer 41, and the lengthwise hole 37 and sideways holes 38 of the magnetic plunger 25, and is held in readiness within the magnetic cylindrical body 4, in particular within the fuel chamber 36.

When the coil 33 is energized by passing current, the magnetic flux generated thereby runs in sequence through the fixed core 6, the yoke 35, the coil housing 34, the magnetic cylindrical body 4, and the magnetic plunger 25, the magnetic plunger 25 is attracted by the magnetic force toward the fixed core 6 against a set load of the valve spring 42, and the stopper rubber 30 of the magnetic plunger 25 abuts against the front end face of the fixed core 6, thus restricting the opening limit of the seating member 29 with respect to the valve seat 8. Gas fuel that has been held in readiness within the magnetic cylindrical body 4 passes through the valve seat 8 and is injected from the nozzle hole 10 into the intake path member P1 of the engine.

In this arrangement, the flow rate of gas fuel at the nozzle hole 10 is regulated at a constant level by the orifice 10a forming an upstream part of the nozzle hole 10. Moreover, since gas fuel that has passed through the orifice 10a flows via the tapered hole 10b to the outlet hole 10c, which is larger in diameter and longer than the orifice 10a, its flow is smooth and no turbulent flow is generated, thereby stabilizing the amount of fuel injected into the intake path member P1. The amount of fuel injected per unit time is controlled by the valve open time of the magnetic plunger 25.

In the magnetic plunger 25, since the spring seat 39 supporting the movable end of the valve spring 42 is disposed offset further forward than the tubular sliding part 27, that is, toward the valve seat 8 side, a centering action works on the tubular sliding part 27 by virtue of the load of the valve spring 42 acting on the spring seat 39, the magnetic plunger 25 can always be maintained in a stable attitude without being tilted, sliding, in the sliding guide hole 21, of the tubular sliding part 27 can therefore be made smooth to thus increase the responsiveness of the magnetic plunger 25, and the timing with which the seating member 29 is detached from and seated on the valve seat 8 can be made accurate to thus stabilize gas fuel injection properties. It thereby becomes possible to set the length L in the axial direction of the tubular sliding part 27 of the magnetic plunger 25 shorter than the outer diameter D, thus achieving a reduction in the length of the gas fuel injection valve in the axial direction.

In accordance with a test, the length L in the axial direction of the tubular sliding part 27 that is supported by the sliding guide hole 21 being substantially 1/2 of the outer diameter D as shown in the illustrated example is the limit for the reduction in length in the axial direction of the tubular sliding part 27, and if it is reduced more than the above, the sliding stability of the magnetic plunger 25 is degraded, which is not desirable.

Furthermore, radial movement of front and rear opposite end parts of the valve spring 42 is restrained by the small diameter hole 37a of the magnetic plunger 25 and the hollow portion 6a of the fixed core 6, which conform thereto, the expansion/compression attitude of the valve spring 42 can be stabilized, and it is possible to prevent the valve spring from making contact with the inner peripheral face of the large diameter hole 37b.

Moreover, since the inner ends of the sideways holes 38 open in the large diameter hole 37b of the magnetic plunger 25, and the inner peripheral face of the large diameter hole 37b and the outer peripheral face of the valve spring 42 define therebetween the tubular gap 43 communicating with the sideways holes 38, gas fuel that has flowed into the lengthwise hole 37 passes not only through the inside of the valve spring 42 but also through the tubular gap 43, which is on the outside thereof, and flows into the sideways holes 38, thus contributing to a reduction in the flow path resistance of the lengthwise hole 37.

Furthermore, the synthetic resin nozzle member 3 is formed on its outer periphery with the first fitting part 11 positioned at the rear end part of the nozzle member 3 and fitted into the fitting connecting hole 18 of the front end part of the magnetic cylindrical body 4, the second fitting part 12 positioned at the front end part of the nozzle member 3 and fitted into the mounting hole 1 of the intake path member P1 of the engine, and the connecting recess 13 positioned between the first and second fitting parts 11 and 12, and since swaging the swage tube part 22 formed at the front end of the magnetic cylindrical body 4 toward the connecting recess 13 side joins the magnetic cylindrical body 4 and the nozzle member 3 to each other, swaging of the swage tube part 22 toward the connecting recess 13 side can be carried out easily by the connecting recess 13 receiving the extremity part of a swaging tool without interference from the second fitting part 12, thus enabling joining of the magnetic cylindrical body 4 and the nozzle member 3 to be carried out reliably. In this arrangement, since the first seal member 16 making intimate contact with the inner peripheral face of the fitting connecting hole 18 of the magnetic cylindrical body 4 is mounted in the annular first seal groove 14 on the outer periphery of the first fitting part 11, it is possible to seal the fitting connecting hole 18, thereby reliably preventing leakage of gas fuel between the magnetic cylindrical body 4 and the nozzle member 3.

Furthermore, since the second seal member 17, which makes intimate contact with the inner peripheral face of the mounting hole 1 when the second fitting part 12 is fitted into the mounting hole 1 of the intake path member P1 of the engine, is mounted in the annular second seal groove 15 on the outer periphery of the second fitting part 12, it is possible to seal the mounting hole 1, thus reliably preventing leakage of gas fuel between the intake path member P1 and the injection valve I. Moreover, forming the second seal groove 15, in which the second seal member 17 is mounted, in the second fitting part 12 of the nozzle member 3 itself, which is supported by the magnetic cylindrical body 4 and projects forward therefrom, makes it unnecessary to employ a special ring for defining the second seal groove 15, thereby cutting the number of components and the number of assembly steps, and consequently reducing the cost.

Moreover, since the synthetic resin nozzle member 3 can form the nozzle hole 10, the first fitting part 11 equipped with the first seal groove 14, the second fitting part 12 equipped with the second seal groove 15, and the connecting recess 13 in one process at the time of molding thereof, hardly any post-processing is necessary after molding, thus further reducing the cost.

The present invention is not limited to the above-mentioned embodiment and may be modified in a variety of ways as long as the modifications do not depart from the spirit and scope thereof.

## Claims

1. A gas fuel injection valve in which a valve housing (2) comprises a nozzle member (3) having a flat valve seat (8) on a front end part thereof and a nozzle hole (10) extending through a central part thereof, a magnetic cylindrical body (4) joined to this nozzle member (3), and a fixed core (6) connected to the rear end side of the magnetic cylindrical body (4), the magnetic cylindrical body (4) slidably houses a magnetic plunger (25) that is attached at a front end thereof with a seating member (29) made of an elastic material that can be seated on the valve seat (8), the magnetic plunger (25) operating so as to detach the seating member (29) from the valve seat (8) when the fixed core (6) is energized, and a valve spring (42) for urging the magnetic plunger (25) toward the valve seat (8) side is provided in a compressed state between the magnetic plunger (25) and the fixed core (6),
**characterized in that** nozzle member (3) is made of a synthetic resin, and the nozzle member (3) is formed on an outer periphery thereof with a first fitting part (11) positioned at a rear end part of the nozzle member (3) and fitted into a fitting connecting hole (18) of a front end part of the magnetic cylindrical body (4), a second fitting part (12) positioned at a front end part of the nozzle member (3) and fitted into a mounting hole (1) of an intake path member (P1) of an engine, and a connecting recess (13) positioned between the first and second fitting parts (11, 12), the magnetic cylindrical body (4) and the nozzle member (3) are joined to each other by swaging toward the connecting recess (13) side a swage tube part (22) formed at a front end of the magnetic cylindrical body (4), and the second fitting part (12) is formed on an outer periphery thereof with an annular seal groove (15) mounted with a seal member (17) that makes intimate contact with an inner peripheral face of the mounting hole (1).

2. The gas fuel injection valve according to Claim 1, wherein
an annular seal groove (14) is formed on the outer periphery of the first fitting part (11), the annular seal groove (14) mounted with a seal member (16) that makes intimate contact with an inner peripheral face of the fitting connecting hole (18).

3. The gas fuel injection valve according to Claim 1, wherein
a front end face of the second fitting part (12) is formed as a tapered face (12a) that increases in diameter in going toward the second seal groove (15) on the outer periphery of the second fitting part (12).

4. The gas fuel injection valve according to Claim 1, wherein
the nozzle hole (10) of the nozzle member (3) comprises an orifice (10a) opening on the valve seat (8), an outlet hole (10c) opening on the front end face of the nozzle member (3) and having a larger diameter and length than the orifice (10a) and a tapered hole (lOb) providing continuous connection between the orifice (10a) and the outlet hole (10c).
